# EUROPÄISCHE PATENTANMELDUNG

(11) **EP 3 989 017 A1**
(43) Veröffentlichungstag der Anmeldung: **27.04.2022**
(21) Anmeldenummer: 21204350.9
(22) Anmeldetag: 22.10.2021
(51) Int. Cl.: G05B 19/042

(54) **STEUERUNGSVERFAHREN FÜR GERÄTE IN EINEM FREIZEITFAHRZEUG**

(30) Priorität: 22.10.2020 DE 102020127901
(71) Anmelder: Erwin Hymer Group SE, 88339 Bad Waldsee (DE)
(72) Erfinder: Silz, Sebastian, 88400 Biberach (DE); Härle, Tim, 88339 Bad Waldsee (DE); Stickelmann, Calvin, 88427 Bad Schussenried (DE)
(74) Vertreter: Waller, Stefan

(57) **Zusammenfassung**

Steuerungsverfahren für Geräte (7) in einem Freizeitfahrzeug (8), bei dem eine Mehrzahl von Geräten (7, 8) durch einen Nutzer jeweils eingestellt werden kann sowie mit einer zentralen Steuereinheit (2), die mit jedem der Geräte (7, 8) eine Datenverbindung (15) aufweist. Vorgeschlagen wird, dass ein Satz von Einstellwerten für jedes verbundene Gerät (7, 8) in der zentralen Steuereinheit (2) abgespeichert ist und von der zentralen Steuereinheit (2) zur Einstellung des Geräts (7, 8) über die Datenverbindung (15) auf das Gerät (7, 8) übertragen wird.

## Beschreibung

Die Erfindung betrifft ein Steuerungsverfahren für Geräte in einem Freizeitfahrzeug, bei dem eine Mehrzahl von Geräten durch einen Nutzer jeweils eingestellt werden kann sowie mit einer zentralen Steuereinheit, die mit jedem der Geräte eine Datenverbindung aufweist, sowie eine Vorrichtung, die eingerichtet ist, solch ein Verfahren auszuführen.

Unter einem Freizeitfahrzeug wird vorliegend ein Fahrzeug verstanden, das zumindest mithilfe von in diesem montierbaren Einrichtungen und Möbeln dem Nutzer eine Möglichkeit zum Schlafen und Wohnen in diesem Fahrzeug bietet. Für eine anderweitige Verwendung, wenn das Fahrzeug nicht als Freizeitfahrzeug zum Campen benutzt wird, können diese Einrichtungen und Möbel zumindest zum Teil ohne großen Aufwand entfernt werden. Weiterhin umfasst der Begriff auch alle Campingfahrzeuge wie Wohnmobile und Wohnwagen, wobei eine Motorisierung der Fahrzeuge nicht zwingend erforderlich ist und ein Freizeitfahrzeug insbesondere auch einen Anhänger umfasst. Solche Freizeitfahrzeuge zeichnen sich durch einen größeren Wohnaufbau aus, wobei in der überwiegenden Anzahl der Fälle nicht die Originalkarosserie, beispielsweise eines Kleintransporters zum Einsatz kommt, sondern ein größerer Aufbau von dem Hersteller des Freizeitfahrzeugs auf einem Chassis aufgebaut wird. Bei einem Wohnanhänger als Freizeitfahrzeug wird regelmäßig ein Anhängerchassis genutzt, auf dem ein Wohnaufbau speziell aufgebaut wird.

In einem solchen Freizeitfahrzeug insbesondere Wohnmobil oder Wohnwagen können verschiedene Geräte eingebaut sein, wie beispielsweise ein Kühlschrank, eine SAT-Anlage, eine Heizung für den Wohnraum, eine Klimaanlage für den Wohnraum, eine elektrische Energieversorgung mit Batterie, eine Solarpanelanlage, Geräte der Warmwasserbereitung und Frischwasserverteilung bzw. Aufbereitung und dergleichen.

Es ist denkbar, solche Geräte, wenn diese eine entsprechende Schnittstelle aufweisen, mit einem Mobiltelefon zu verbinden und damit zu bedienen.

Nachteilig hierbei ist aber, dass die eingestellten Werte für solche Geräte, was auch als Szenarien bezeichnet wird, dann nur auf einem Gerät als Endgerät gespeichert sind und dadurch ausführbar vorliegen. Dies verhindert bzw. erschwert ein automatisiertes Herstellen vordefinierter Zustände von Komponenten bzw. Geräten in einem Freizeitfahrzeug. Sind in einem Freizeitfahrzeug mehrere Bedienschnittstellen in Verwendung, so müssen Szenarien an jedem Endgerät separat eingestellt werden.

Der vorliegenden Erfindung liegt daher die Aufgabe zugrunde, ein Steuerungsverfahren für Geräte in einem Freizeitfahrzeug, mit dem die zuvor genannten Nachteile vermieden werden und mit dem die Einstellwerte automatisiert für jeden Betriebszustand schnell und bequem umgesetzt werden können, sowie eine entsprechende Vorrichtung zur Verfügung zu stellen.

Diese Aufgabe wird durch ein Steuerungsverfahren für Geräte in einem Freizeitfahrzeug mit den Merkmalen des unabhängigen Patentanspruchs 1 und durch eine Vorrichtung mit den Merkmalen des Patentanspruchs 8 gelöst. Vorteilhafte Weiterbildungen der Erfindung sind in den Unteransprüchen angegeben.

Die Aufgabe wird erfindungsgemäß dadurch gelöst, dass bei einem Steuerungsverfahren für Geräte in einem Freizeitfahrzeug, bei dem eine Mehrzahl von Geräten durch einen Nutzer jeweils eingestellt werden kann sowie mit einer zentralen Steuereinheit, die mit jedem der Geräte eine Datenverbindung aufweist, ein Satz von Einstellwerten für jedes verbundene Gerät in der zentralen Steuereinheit abgespeichert ist und von der zentralen Steuereinheit zur Einstellung des Geräts über die Datenverbindung auf das Gerät übertragen wird.

Ferner wird die Aufgabe durch eine Vorrichtung, die eingerichtet ist, ein solches Steuerungsverfahren auszuführen, gelöst.

Speziell kann ein Prozess zum Anlegen, Abspeichern und Verwalten von Szenarien im Freizeitfahrzeug und zum Verteilung respektive zum Bedienen an mehreren Endgeräten ermöglicht werden.

In einer vorteilhaften Ausgestaltung können die Einstellwerte für jedes Gerät über ein Eingabegerät eingestellt werden, das mit der Steuereinheit verbunden ist, insbesondere über eine drahtlose Datenverbindung. Somit ist eine komfortable Benutzung möglich. Insbesondere kann hierdurch sowohl im als auch in der Umgebung des Freizeitfahrzeugs eine Einstellung erfogen.

Vorteilhaft ist das Eingabegerät ein Smartphone, ein Tablett oder ein über ein Netzwerk, insbesondere das Internet, verbundener Computer. Dadurch kann auf eine bestehende Infrastruktur zurückgegriffen werden. Auch eine Verbindung über WLAN oder ähnliches ist möglich.

Es können für ein Gerät mehrere Einstellsätze abhängig von Parametern abgespeichert und von der Steuereinheit übertragen werden. Hierdurch ist eine besonders komfortable Benutzung möglich. Insbesondere kann dann ein aufwändiges Einstellen beziehungsweise Ändern und/oder Überprüfen aller Einzelwerte vermieden werden

In einer günstigen Ausgestaltung ist ein Parameter einer oder mehrere aus den Daten geographischer Ort, Umgebungslichtstärke, Höhe über dem Meer und/oder Uhrzeit. Somit können in Abhängigkeit von gegebenen Umständen bereits Einstellungen bestimmt sein.

Ein Gerät kann insbesondere ein Kühlschrank und/oder eine SAT-Anlage und/oder eine Heizung und/oder ein Solarpanel und/oder eine Klimaanlage für den Wohnraum und/oder eine Heizung für den Wohnraum und/oder ein Gerät der Warmwasserheizung und/oder ein Gerät der Wasseraufbereitung bzw. Verteilung sein. Gerade für solche Geräte ist auch eine Einstellung in Abhängigkeit von zumindest einem Parameter von Vorteil.

Es ist vorteilhaft, über Netzwerke und Datenverbindungen individuelle Szenarien beziehungsweise benutzte Einstellwerte von Benutzern zu übertragen und ggf. auf alle SCUs flottenweit auszuliefern bzw. typische Einstellwerte auf dieser Basis vorzuschlagen. Ein Benutzer kann dann beispielsweise die vorgeschlagenen Einstellwerte akzeptieren (bestätigen) oder einen oder mehrere Einstellwerte noch abändern. Durch den Vorschlag wird aber eine sehr komfortable Nutzung möglich, da bereits erprobte beziehungsweise geeignete Einstellwerte vorgeschlagen werden, so dass der Benutzer entsprechende seinen persönlichen Präferenzen zum Beispiel Änderungen vom Standardfall vornehmen kann. Beispielsweise kann für einen Benutzer das Einsparen von Heizenergie wichtig sein, so dass er eine Absenkung der Heizleistung entsprechend einer um 1 °C verringerten Innenraumtemperatur wählt.

In einer vorteilhaften Weiterbildung der Erfindung werden Sätze von Einstellwerten in einer Cloud zur Verfügung gestellt und können von der Steuereinheit abgerufen oder dort abgelegt werden. Hierdurch stehen die Einstellwerte für verschiedene Fahrzeuge zur Verfügung. Insbesondere erleichtert dies die Nutzung bei einem Fahrzeugwechsel, beispielsweise bei einem Neukauf oder bei Mietfahrzeugen.

Alle Geräte haben Zugriff auf die gleichen Szenarien. Es wird sichergestellt, dass von jeder Bedienschnittstelle nur erlaubte Szenarien im Kontext eines bestimmten Freizeitfahrzeugs ausgeführt werden können. Hierdurch werden Fehlbedienungen von Vorhinein verhindert. Außerdem vermeidet dies Kundendienstanfragen.

Weitere Vorteile und Einzelheiten der Erfindung werden anhand des in der schematischen Figur dargestellten Ausführungsbeispiels näher erläutert.

Hierbei zeigt:

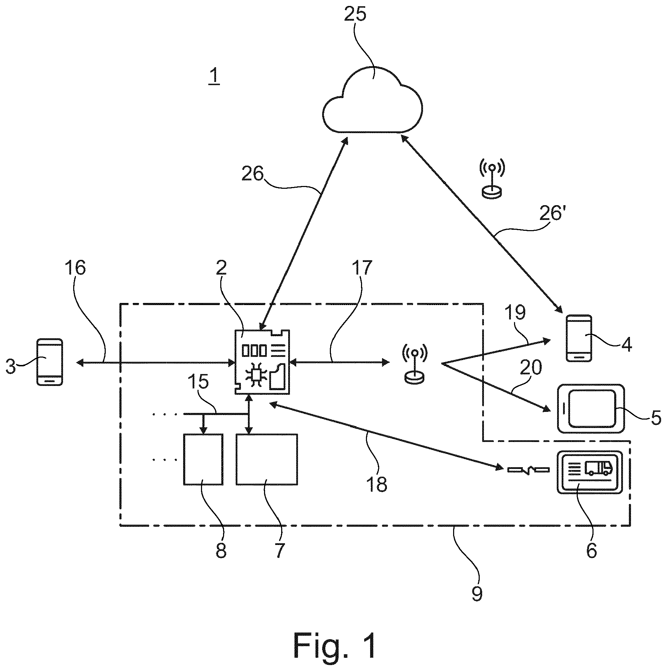

- Fig. 1: eine Vorrichtung mit einer Steuereinheit, auf der ein Nutzer einen als Szenario bezeichneten Einstellsatz via BLE (Blue Tooth Low energy) oder LTE über ein Einstellgerät, insbesondere ein Smartphone, abspeichern kann bzw. ein bestimmtes Gerät dadurch einstellt.

Fig. 1 zeigt eine Vorrichtung 1 mit einer zentralen Steuereinheit 2, auf der ein Nutzer einen als Szenario bezeichneten Einstellsatz via BLE (Blue Tooth Low energy) oder LTE über ein Einstellgerät 3, 4, 5, 6 abspeichern kann bzw. ein bestimmtes Gerät 7, 8 dadurch einstellt. Exemplarisch sind hier zwei Geräte 7, 8 dargestellt.

Die Geräte 7, 8 können jeweils als Kühlschrank, SAT-Anlage, Heizung, Solarpanel oder Klimaanlage ausgebildet sein. Speziell kann hierdurch eine Heizung beziehungsweise Kühlung eines Wohnraums des Freizeitfahrzeugs 9 erfolgen. Ferner können durch geeignete Geräte eine Warmwasserheizung beziehungsweise eine Wasseraufbereitung erfolgen. Beispielsweise kann dann eine Vorgabe der Wassertemperatur erfolgen. Wenn das Freizeitfahrzeug 9 auf einem Campingplatz geparkt ist, wo eine externe Frischwasserversorgung und eine externe Abwasserentsorgung verfügbar sind, dann kann beispielsweise der Aufwand für eine Wasseraufbereitung reduziert werden.

Hierbei wird ein Steuerungsverfahren für die Geräte 7, 8 eines Freizeitfahrzeugs 8 ausgeführt. Die Vorrichtung 1 führt hierbei das Steuerungsverfahren aus. Insbesondere kann das Steuerungsverfahren zumindest im Wesentlichen durch die zentrale Steuereinheit 2 ausgeführt werden.

Bei dem Steuerungsverfahren können die Geräten 7, 8 durch einen Nutzer jeweils eingestellt werden. Die Steuereinheit 2 ist hierfür mit jedem der Geräte 7, 8 über eine Datenverbindung 15 verbunden. Ein Satz von Einstellwerten ist für jedes verbundene Gerät 7, 8 in der zentralen Steuereinheit 2 abgespeichert. Die Einstellwerte können dann von der zentralen Steuereinheit 2 zur Einstellung der Geräte 7, 8 über die Datenverbindung 15 auf die Gerät 7, 8 übertragen werden.

Die Einstellwerte für die Geräte 7, 8 können über unterschiedliche Eingabegerät 3, 4, 5, 6 eingestellt werden, die hierfür zumindest temporär mit der Steuereinheit 2 verbunden sind. Die Verbindungen 16, 17, 18, 19, 20 sind vorzugsweise als drahtlose Datenverbindungen 16, 17, 18, 19, 20 realisiert. Speziell die Verbindung 18 kann aber auch als kabelgebundene und/oder feste Datenverbindung 18 realisiert sein.

Beispielsweise können die Eingabegeräte 3, 4, 5, 6 als Smartphone 3, 4, als Tablett 5 oder als Computer 6 ausgebildet sein. Der Computer 6 kann beispielsweise über ein Netzwerk, insbesondere das Internet oder WLAN, mit dem der Steuereinheit 2 verbunden sein.

Bei einer bevorzugten Ausgestaltung können mittels der Geräte 7, 8 die Einstellsätze für die Geräte 7, 8 in Abhängigkeit von Parametern abgespeichert und von der Steuereinheit 2 übertragen werden. Solche Parameter erleichtern dem Benutzer die Einstellung. Als Parameter können der geographischer Ort, also der Aufenthalt des Freizeitfahrzeugs 9, eine Umgebungslichtstärke im Bereich des Freizeitfahrzeugs 9, ein Höhe über dem Meer, auf der sich das Freizeitfahrzeug 9 befindet, und eine Uhrzeit dienen. Vorzugsweise werden hierbei mehrere dieser Parameter zusammen genutzt. Beispielsweise kann ermittelt werden, dass das Freizeitfahrzeug 9 auf einem Campingplatz geparkt ist. Bei einer hohen Umgebungslichtstärke und einer hohen Umgebungstemperatur kann beispielsweise eine Temperatur für das Warmwasser abgesenkt werden. Außerdem kann der Tagesrhythmus bei der Darstellung der vorgeschlagenen Szenarien mit einbezogen werden. Beispielsweise kann das Warmwasser morgens etwas wärmer sein.

Sätze von Einstellwerten können in einer Cloud 25 zur Verfügung gestellt werden. Dann können diese von der Steuereinheit 2 abgerufen oder dort abgelegt werden. Die Steuereinheit kann über eine Verbindung 26, die eine drahtlose Verbindung über beispielsweise ein Mobilfunknetz, und eine weitere Verbindung, insbesondere über Landleitungen, umfassen kann. Eine entsprechende Verbindung 26' kann auch einen Datenaustausch zwischen den Eingabegeräten 3, 4, 5, 6 und der Cloud 25 ermöglichen, wie es exemplarisch anhand des Smartphones 4 veranschaulicht ist. Die Cloud 25 ermöglicht auch einen Export von persönlichen Szenarien, um diese beispielsweise unter den Mitgliedern einer Gruppe zu teilen.

Szenarien, also gespeicherte Einstellungen zum automatisierten Herstellen von vordefinierter Zustände von Geräten (Komponenten) 7, 8 im Freizeitfahrzeug 9, können somit auf mehreren Eingabegeräten 3, 4, 5, 6 gespeichert werden. Nachfolgend können diese Szenarien von den Geräten 7, 8 bei der Ausführung ihrer jeweiligen Funktion berücksichtigt werden. Die verschiedenen Bedienschnittstellen im Freizeitfahrzeug 9, die durch die Eingabegeräte 3, 4, 5, 6 ermöglicht werden, ermöglichen einen Zugriff und eine Einstellung bezüglich eines jeweils einheitlichen Szenarios, das auf der zentralen Steuereinheit 2 gespeichert ist. Hierbei kommt ein geeignetes Kommunikationsprotokoll zum Einsatz. Ferner wird sichergestellt, dass nur erlaubte Szenarien im Kontext eines bestimmten Freizeitfahrzeugs 9 ausgeführt werden können.

Die Erfindung ist nicht auf die beschriebenen Ausgestaltungen beschränkt.

## Patentansprüche

1. Steuerungsverfahren für Geräte (7) in einem Freizeitfahrzeug (8), bei dem eine Mehrzahl von Geräten (7, 8) durch einen Nutzer jeweils eingestellt werden kann sowie mit einer zentralen Steuereinheit (2), die mit jedem der Geräte (7, 8) eine Datenverbindung (15) aufweist,
**dadurch gekennzeichnet,**
**dass** ein Satz von Einstellwerten für jedes verbundene Gerät (7, 8) in der zentralen Steuereinheit (2) abgespeichert ist und von der zentralen Steuereinheit (2) zur Einstellung des Geräts (7, 8) über die Datenverbindung (15) auf das Gerät (7, 8) übertragen wird.

2. Steuerungsverfahren nach Anspruch 1,
**dadurch gekennzeichnet,**
**dass** die Einstellwerte für jedes Gerät (7, 8) über ein Eingabegerät (3, 4, 5, 6) eingestellt werden können, das mit der Steuereinheit (2) verbunden ist, insbesondere über eine drahtlose Datenverbindung (16, 17, 18, 19, 20).

3. Steuerungsverfahren nach Anspruch 2,
**dadurch gekennzeichnet,**
**dass** das Eingabegerät (3, 4, 5, 6) ein Smartphone (3, 4), ein Tablett (5) oder ein über ein Netzwerk, insbesondere das Internet, verbundener Computer (6) ist

4. Steuerungsverfahren nach einem der vorhergehenden Ansprüche,
**dadurch gekennzeichnet,**
**dass** für eine Gerät (7, 8) mehrere Einstellsätze abhängig von Parametern abgespeichert sind und von der Steuereinheit (2) übertragen werden.

5. Steuerungsverfahren nach Anspruch 4,
**dadurch gekennzeichnet,**
**dass** ein Parameter einer oder mehrere aus den Daten geographischer Ort, Umgebungslichtstärke, Höhe über dem Meer und/oder Uhrzeit ist.

6. Steuerungsverfahren nach einem der vorhergehenden Ansprüche,
**dadurch gekennzeichnet,**
**dass** ein Gerät (7, 8) insbesondere ein Kühlschrank und/oder eine SAT-Anlage und/oder eine Heizung und/oder ein Solarpanel und/oder eine Klimaanlage für den Wohnraum und/oder eine Heizung für den Wohnraum und/oder ein Gerät der Warmwasserheizung und/oder ein Gerät der Wasseraufbereitung bzw. Verteilung ist.

7. Steuerungsverfahren nach einem der vorhergehenden Ansprüche,
**dadurch gekennzeichnet,**
**dass** Sätze von Einstellwerten in einer Cloud (25) zur Verfügung gestellt werden und von der Steuereinheit (2) abgerufen oder dort abgelegt werden können.

8. Vorrichtung (1), die eingerichtet ist, ein Steuerungsverfahren nach einem der vorhergehenden Ansprüche auszuführen.
